# EUROPEAN PATENT SPECIFICATION

(11) **EP 2 976 859 B1**
(45) Date of publication and mention of the grant of the patent: **12.01.2022**
(21) Application number: 14768228.0
(22) Date of filing: 20.03.2014
(51) Int. Cl.: H04L 12/70, H04L 12/66, H04W 56/00

(54) **APPARATUS AND METHOD FOR ACQUIRING SYNCHRONIZATION IN COOPERATIVE COMMUNICATION SYSTEM**
VORRICHTUNG UND VERFAHREN ZUR SYNCHRONISATIONSERFASSUNG IN EINEM KOOPERATIVEN KOMMUNIKATIONSSYSTEM
APPAREIL ET PROCÉDÉ POUR L'ACQUISITION DE SYNCHRONISATION DANS UN SYSTÈME DE COMMUNICATIONS COOPÉRATIVES

(30) Priority: 20.03.2013 KR 20130029554
(43) Date of publication of application: 27.01.2016
(73) Proprietor: Samsung Electronics Co., Ltd., Suwon-si, Gyeonggi-do 443-742 (KR)
(72) Inventor: AGIWAL, Anil, Suwon-si, Gyeonggi-do 443-742 (KR); CHANG, Young-Bin, Suwon-si, Gyeonggi-do, 443-742 (KR)
(74) Representative: Gulde & Partner
(86) International application number: PCT/KR2014/002344
(87) International publication number: WO 2014/148836

(56) References cited:
- WO-A1-2013/022859
- WO-A1-2014/017770
- WO-A2-2009/016619
- WO-A2-2011/020062
- US-A1- 2011 216 662
- US-A1- 2012 087 342
- US-A1- 2012 147 805
- None

## Description

### Technical Field

The present disclosure relates to an apparatus and method for acquiring synchronization in a cooperative communication system. More particularly, the present disclosure relates to an apparatus and method for acquiring synchronization for data which is provided to a Mobile Station (MS) in a cooperative communication system in which a plurality Base Stations (BSs) provides a service to the MS.

### Background Art

In recent years, a mobile communication system has been developed to satisfy a growing number of broadband subscribers and to provide more and better applications and services. For example, in a 3rd Generation Partnership Project 2 (3GPP2), a Code Division Multiple Access 2000 (CDMA 2000) system, an 1x Evolution Data Optimized (1x EVDO) system, a Ultra Mobile Broadband (UMB) system, a Wideband Code Division Multiple Access (WCDMA) system, a High Speed Packet Access (HSPA) system, and a Long Term Evolution (LTE) system have been developed. In an Institute of Electrical and Electronics Engineers (IEEE), a Mobile Worldwide Interoperability for Microwave Access (WiMAX) system has been developed.

As more and more people become users of a mobile communication system, and more and more services are provided over the mobile communication system, there is a need for a broadband mobile communication system with large capacity, high throughput, low latency, and high reliability.

One of approaches to increase capacity of a mobile communication system is a high density deployment of small Base Stations (BSs). However, a cell edge area may be increased compared to a traditional macro BS deployment in which each macro BS serves a larger geographical area. If there is no coordination between the small BSs, capacity of the mobile communication system in the high density deployment of small BSs may be lower than capacity of the mobile communication system in the traditional macro BS deployment due to interference from neighbor BS(s) and frequent handovers.

In order to solve these problems, multi-BS cooperation schemes are necessary, and a cooperative communication system in which a plurality of BSs cooperates with one another to provide a service to a Mobile Station (MS) has been introduced. In the cooperative communication system, the BSs included in the cooperative communication cell which provide the service to the MS may be dynamically changed based on movement of the MS.

So, there is a need for synchronizing MAC layer data in cooperative communication system.

The above information is presented as background information only to assist with an understanding of the present disclosure. No determination has been made, and no assertion is made, as to whether any of the above might be applicable as prior art with regard to the present disclosure.

Document WO2014/017770, which is usable under Art 54(3) EPC, discloses a method and apparatus according to the prior art.

Document WO2011/020062 discloses a method and apparatus according to the prior art.

### Disclosure of Invention

### Technical Problem

To address the above-discussed deficiencies, it is a primary object to provide an apparatus and method for acquiring synchronization in a cooperative communication system.

Another aspect of the present disclosure is to provide an apparatus and method for acquiring synchronization for data which is provided to an MS in a cooperative communication system where a plurality of BSs provide a service to the MS.

Another aspect of the present disclosure is to provide an apparatus and method for acquiring synchronization for MAC layer data in a cooperative communication system.

Another aspect of the present disclosure is to provide an apparatus and method for acquiring synchronization among buffers included in BSs which a cooperative communication cell includes in a cooperative communication system.

### Solution to Problem

The invention is as defined in the appended claims.

Before undertaking the DETAILED DESCRIPTION below, it may be advantageous to set forth definitions of certain words and phrases used throughout this patent document: the terms "include" and "comprise," as well as derivatives thereof, mean inclusion without limitation; the term "or," is inclusive, meaning and/or; the phrases "associated with" and "associated therewith," as well as derivatives thereof, may mean to include, be included within, interconnect with, contain, be contained within, connect to or with, couple to or with, be communicable with, cooperate with, interleave, juxtapose, be proximate to, be bound to or with, have, have a property of, or the like; and the term "controller" means any device, system or part thereof that controls at least one operation, such a device may be implemented in hardware, firmware or software, or some combination of at least two of the same. It should be noted that the functionality associated with any particular controller may be centralized or distributed, whether locally or remotely. Definitions for certain words and phrases are provided throughout this patent document, those of ordinary skill in the art should understand that in many, if not most instances, such definitions apply to prior, as well as future uses of such defined words and phrases.

### Brief Description of Drawings

For a more complete understanding of the present disclosure and its advantages, reference is now made to the following description taken in conjunction with the accompanying drawings, in which like reference numerals represent like parts:
FIG. 1A schematically illustrates managing a data flow in a CDMA mobile communication system;
FIG. 1B schematically illustrates managing a data flow in a CoMP system;
FIG. 1C schematically illustrates managing a data flow in cooperative communication system;
FIG. 2 schematically illustrates a structure of a cooperative communication system according to an embodiment of the present disclosure;
FIG. 3 schematically illustrates a MAC SDU synchronization process in a cooperative communication system according to an embodiment of the present disclosure;
FIG. 4 schematically illustrates an example of a MAC SDU synchronization process in a case that a serving BS allocates an SN in a cooperative communication system according to an embodiment of the present disclosure;
FIG. 5 schematically illustrates another example of a MAC SDU synchronization process in a case that a serving BS allocates an SN in a cooperative communication system according to an embodiment of the present disclosure;
FIG. 6 schematically illustrates still another example of a MAC SDU synchronization process in a case that a serving BS allocates an SN in a cooperative communication system according to an embodiment of the present disclosure;
FIG. 7 schematically illustrates an example of a MAC SDU synchronization process in a case that a data GW allocates an SN in a cooperative communication system according to an embodiment of the present disclosure;
FIG. 8 schematically illustrates another example of a MAC SDU synchronization process in a case that a data GW allocates an SN in a cooperative communication system according to an embodiment of the present disclosure;
FIG. 9 schematically illustrates a buffer synchronization process in a cooperative communication system according to an embodiment of the present disclosure;
FIG. 10 schematically illustrates an example of a buffer synchronization process in a cooperative communication system according to an embodiment of the present disclosure;
FIG. 11 schematically illustrates a signal transmitting/receiving process in a cooperative communication system according to an example of a buffer synchronization process in FIG. 10;
FIG. 12 schematically illustrates another example of a buffer synchronization process in a cooperative communication system according to an embodiment of the present disclosure;
FIG. 13 schematically illustrates a signal transmitting/receiving process in a cooperative communication system according to another example of a buffer synchronization process in FIG. 12;
FIG. 14 schematically illustrates still another example of a buffer synchronization process in a cooperative communication system according to an embodiment of the present disclosure;
FIG. 15 schematically illustrates a signal transmitting/receiving process in a cooperative communication system according to still another example of a buffer synchronization process in FIG. 14;
FIG. 16 schematically illustrates an inner structure of a serving BS in a cooperative communication system according to an embodiment of the present disclosure;
FIG. 17 schematically illustrates an inner structure of a data GW in a cooperative communication system according to an embodiment of the present disclosure;
FIG. 18 schematically illustrates an inner structure of a cooperative communication cell member BS in a cooperative communication system according to an embodiment of the present disclosure; and
FIG. 19 schematically illustrates an inner structure of an MS in a cooperative communication system according to an embodiment of the present disclosure.
Throughout the drawings, it should be noted that like reference numbers are used to depict the same or similar elements, features, and structures.

### Mode for the Invention

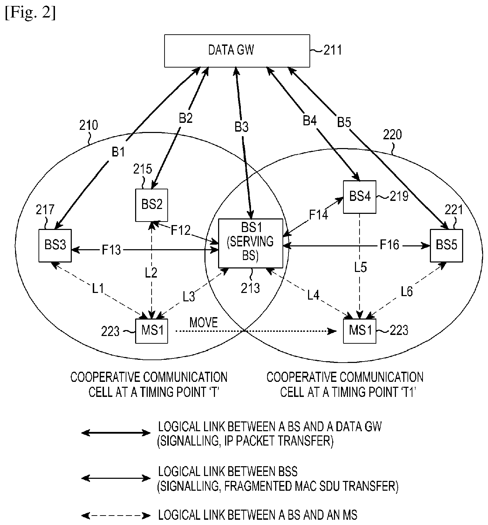

FIGURES 2 through 19, discussed below, and the various embodiments used to describe the principles of the present disclosure in this patent document are by way of illustration only and should not be construed in any way to limit the scope of the disclosure. Those skilled in the art will understand that the principles of the present disclosure may be implemented in any suitably arranged telecommunication technologies. The following description with reference to the accompanying drawings is provided to assist in a comprehensive understanding of various embodiments of the present disclosure as defined by the claims. It includes various specific details to assist in that understanding but these are to be regarded as merely exemplary, In addition, descriptions of well-known functions and constructions may be omitted for clarity and conciseness.

The terms and words used in the following description and claims are not limited to the bibliographical meanings, but, are merely used by the inventor to enable a clear and consistent understanding of the present disclosure. Accordingly, it should be apparent to those skilled in the art that the following description of various embodiments of the present disclosure is provided for illustration purpose only and not for the purpose of limiting the present disclosure as defined by the appended claims.

Although ordinal numbers such as "first," "second," and so forth will be used to describe various components, those components are not limited herein. The terms are used only for distinguishing one component from another component. For example, a first component may be referred to as a second component and likewise, a second component may also be referred to as a first component, without departing from the teaching of the inventive concept. The term "and/or" used herein includes any and all combinations of one or more of the associated listed items.

The terminology used herein is for the purpose of describing various embodiments only and is not intended to be limiting. As used herein, the singular forms are intended to include the plural forms as well, unless the context clearly indicates otherwise. It will be further understood that the terms "comprises" and/or "has," when used in this specification, specify the presence of a stated feature, number, step, operation, component, element, or combination thereof, but do not preclude the presence or addition of one or more other features, numbers, steps, operations, components, elements, or combinations thereof.

The terms used herein, including technical and scientific terms, have the same meanings as terms that are generally understood by those skilled in the art, as long as the terms are not differently defined. It should be understood that terms defined in a generally-used dictionary have meanings coinciding with those of terms in the related technology.

An embodiment of the present disclosure proposes an apparatus and method for acquiring synchronization in a cooperative communication system.

An embodiment of the present disclosure proposes an apparatus and method for acquiring synchronization for data which is provided to a Mobile Station (MS) in a cooperative communication system where a plurality of Base Stations (BSs) provide a service to the MS.

An embodiment of the present disclosure proposes an apparatus and method for acquiring synchronization for Medium Access Control (MAC) layer data in a cooperative communication system.

An embodiment of the present disclosure proposes an apparatus and method for acquiring synchronization among buffers included in BSs which a cooperative communication cell includes in a cooperative communication system.

A method and apparatus proposed in various embodiments of the present disclosure may be applied to various communication systems such as a Long Term Evolution (LTE) mobile communication system, an LTE-Advanced (LTE-A) mobile communication system, a High Speed Downlink Packet Access (HSDPA) mobile communication system, a High Speed Uplink Packet Access (HSUPA) mobile communication system, a High Rate Packet Data (HRPD) mobile communication system proposed in a 3rd Generation Project Partnership 2 (3GPP2), a Wideband Code Division Multiple Access (WCDMA) mobile communication system proposed in the 3GPP2, a Code Division Multiple Access (CDMA) mobile communication system proposed in the 3GPP2, an Institute of Electrical and Electronics Engineers (IEEE) mobile communication system, an Evolved Packet System (EPS), a Mobile Internet Protocol (Mobile IP) system, and/or the like.

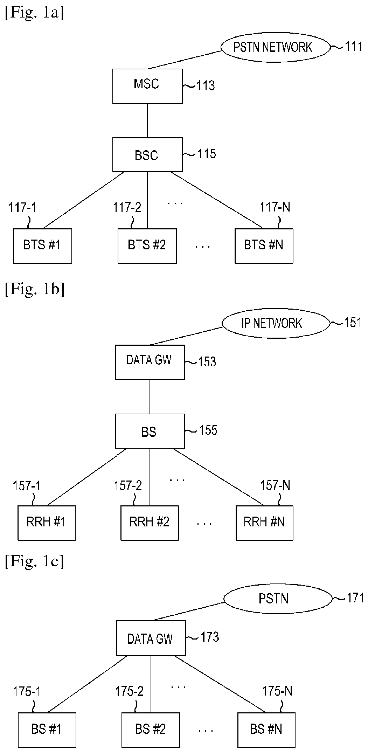

In a cellular communication system, a centralized controller manages a data flow, and this will be described with reference to FIGS. 1A and 1C.

A process of managing a data flow in a CDMA mobile communication system will be described with reference to FIG. 1A.

FIG. 1A schematically illustrates a process of managing a data flow in a CDMA mobile communication system.

Referring to FIG. 1A, the CDMA mobile communication system includes a Public Switched Telephone Network (PSTN) 111, a Mobile Switching Center (MSC) 113, a Base Station Controller (BSC) 115, and a plurality of Base Transceiver Stations (BTSs), e.g., N BTSs, i.e., a BTS#1 117-1, a BTS#2 117-2, ... , a BTS#N 117-N.

In the CDMA mobile communication system, downlink data (call) is received from the PSTN 111 through the MSC 113, and the MSC 113 transfers the downlink data (call) which is transferred from the PSTN 111 to the BSC 115. The BSC 115 multicasts the downlink data (call) which is transferred from the MSC 113 to BTSs, e.g., a BTS #1 117-1, a BTS #2 117-2, ... , a BTS #N 117-N.

So, data synchronization through all BSs 117-1, 117-2,..., 117-N is managed by the BSC 115.

Even though not shown in FIG. 1A, in a CDMA mobile communication system, uplink data (call) is vice versa of a downlink data (call) case.

A process of managing a data flow in a CDMA mobile communication system has been described with reference to FIG. 1A, and a process of managing a data flow in a Cooperative Multi-Point (CoMP) system will be described with reference to FIG. 1B.

FIG. 1B schematically illustrates a process of managing a data flow in a CoMP system.

Referring to FIG. 1B, the CoMP system includes an Internet Protocol (IP) network 151, a data Gateway (GW) 153, a BS 155, a plurality of Radio Remote Heads (RRHs), e.g., N RRHs, i.e., an RRH#1 157-1, an RRH#2 157-2, ... , an RRH#N 157-N, and an MS (not shown in FIG. 1B).

In the CoMP system, downlink data for a data bearer (i.e., IP packets) is received in the data GW 153 from the IP network 151. The data bearer denotes an IP packet flow with a predefined quality of a service between the data GW 153 and an MS (not shown in FIG. 1B), and the data GW 153 transmits the IP packets to the BS 155. The BS 155 transmits the data received from the data GW 153 to RRHs, e.g., a RRH#1 157-1, a RRH#2 157-2, ... , a RRH#N.

So, data synchronization through all RRHs 157-1, 157-2, ... , 157-N is managed by the BS 155..

Even though not shown in FIG. 1B, in a CoMP system, uplink data is vice versa of a downlink data case.

A process of managing a data flow in a CoMP system has been described with reference to FIG. 1B, and a process of managing a data flow in a cooperative communication system will be described with reference to FIG. 1C.

FIG. 1C schematically illustrates a process of managing a data flow in cooperative communication system.

Referring to FIG. 1C, the cooperative communication system includes a PSTN 171, a data GW 173, a plurality of BSs, e.g., N BSs, i.e., a BS #1 175-1, a BS #2 175-2, ... , a BS #N 175-N, and an MS (not shown in FIG. 1C).

In the cooperative communication system, downlink data for a data bear is received in the data GW 173 from the IP network 171. The data bear denotes an IP packet flow with a defined quality of a service between the data GW 173 and the MS. Each data bearer is associated with a Traffic Flow Template (TFT).

The data GW 173 maps IP packets which are received from the IP network 171 to a data bear using the TFT. TFTs use IP header information such as a source IP address and a destination IP address and a Transmission Control Protocol (TCP) port for filter packets such as a Voice over IP (VoIP) from a web browsing traffic so that each can be transmitted to each bearer with an appropriate Quality of Service (QoS). The data GW 173 maintains a mapping of each data bearer to a multicast group for logical links between the data GW 173 and BSs, e.g., the BS #1 175-1, the BS #2 175-2, ... , the BS #N 175-N.

For a data bearer between the MS and the data GW 173, a multicast group of logical links includes logical links which are generated between the data GW 173 and all of BSs of a cooperative communication cell for the MS. For convenience, a multicast group including logical links which are generated among related entities is called 'logical link multicast group'. For example, a multicast group including logical links between a data GW and a BS is called 'logical link multicast group between a data GW and a BS'. Here, a logical link multicast group between data GWs and BSs keep changing with an addition and a deletion of BSs included in the cooperative communication cell. The data GW 173 multicasts received IP packets of a data bearer on a logical link multicast group among a data GW and BSs associated with a data bearer.

In a cooperative communication system, there is no BSC or RRH and BSs which have the same capabilities, therefore, it is possible that a data GW manages data synchronization over all BSs.

In a current cooperative communication system, a data GW has an IP packet routing function (layer 3) but not a Medium Access Control (MAC) (layer 2) packet processing function.

In order to communicate with a plurality of BSs included in a cooperative communication cell in a cooperative communication system, MAC layer data should be synchronized. However, in the current cooperative communication system, there is no detailed scheme for MAC layer data synchronization.

In a cooperative communication system, a cooperative communication cell is formed for providing a service to an MS. The number of BSs included in the cooperative communication cell is not fixed, and the cooperative communication cell for the MS is continuously re-formed. The cooperative communication cell is a user centric-virtual cell including BSs. In the cooperative communication cell, one or more BSs which are dynamically allocated provide a service to the MS.

In order to enable to perform a cooperative communication among BSs included in the cooperative communication cell, one BS is designated a serving BS, and other BSs are designated cooperative communication cell member BSs. BSs included in the cooperative communication cell have the same capabilities, and each of the BSs included in the cooperative communication cell can provide a service to an arbitrary MS as a serving BS, or a cooperative communication cell member BS, or the serving BS and the cooperative communication cell member BS.

In one cooperative communication cell, a BS which provides a service to an arbitrary MS as a serving BS can be a cooperative communication cell member BS for other cooperative communication cell. In a cooperative communication cell, a serving BS can dynamically determine BSs which transmit/receive data to/from an arbitrary MS. The serving BS determines whether the serving BS adds a specific BS as a cooperative communication cell member BS into the cooperative communication cell or deletes the specific BS from the cooperative communication cell.

A structure of a cooperative communication system according to an embodiment of the present disclosure will be described with reference to FIG. 2.

FIG. 2 schematically illustrates a structure of a cooperative communication system according to an embodiment of the present disclosure.

Referring to FIG. 2, the cooperative communication system includes a data Gate Way (GW) 211, a plurality of BSs, e.g., five BSs, i.e., a BS #1 213, a BS #2 215, a BS #3 217, a BS #4 219, and a BS #5 221, and an MS 223. At a timing point 't', a cooperative communication cell 210 for the MS 223 includes the BS #1213, the BS #2 215, and the BS #3 217, and the BS #1 213 becomes a serving BS. According to a movement of the MS 223, at a timing point 'tl' different to the timing point 't', a cooperative communication cell 220 for the MS 223 includes the BS #1213, the BS #4 219, and the BS #5 221, and the BS #1 213 becomes a serving BS.

In the cooperative communication system in FIG. 2, downlink data for a data bearer is transferred from an Internet Protocol (IP) network (not shown in FIG. 2) to the data GW 211. The data bearer denotes an IP packet flow with a Quality of Service (QoS) which is defined between the data GW 211 and the MS 223.

Each data bearer is associated with a Traffic Flow Template (TFT). The data GW 211 maps IP packets which are received from the IP network to a data bearer using the TFT. Here, TFTs use IP header information such as a source IP address and a destination IP address, and a Transmission Control Protocol (TCP) port for packet filters such as a Voice over IP (VoIP) from web browsing traffic in order that each of the TFTs is transmitted through a bearer with an appropriate QoS.

The data GW 211 manages a mapping of each data bearer to a multicast group for logical links between the data GW 211 and BSs. For a data bearer between the MS 223 and the data GW 211, a multicast group for logical links includes logical links which are generated among the data GW 211 and BSs included in a cooperative communication cell of the MS 223. A multicast group for logical links among data GWs and BSs which are associated with a data bearer maintains a change including addition and deletion of the BSs included in the cooperative communication cell. For convenience, a multicast group including logical links is called a 'logical link multicast group'.

In a downlink, the data GW 211 multicasts IP packets of the data bearer in a logical link multicast group among the GWs and the BSs which are associated to the data bearer.

A MAC layer logical connection is established between a cooperative communication cell which transfers IP packets of a data bearer between the MS 223 and a BS(s) and the MS 223. The MAC layer logical connection does not exist among each of BSs included in the cooperative communication cell and MSs.

The MS 223 and the BS(s) included in the cooperative communication cell identify a MAC layer logical connection regardless of an MS-BS air link which is used for transmitting/receiving using the same Flow/connection Identifier (FID). There is one-to-one mapping among the MAC layer logical connection, a logical link between a BS and a data GW, and a data bearer between an MS and the data GW.

In one embodiment of the present disclosure, BSs included in a cooperative communication cell, i.e., BSs including at least one cooperative communication cell member BS and a serving BS are logically or physically connected to the data GW 211.

As illustrated in FIG. 2, the data GW 211 multicasts IP packets between the MS 223 and the data GW 211 through logical links B1, B2, B3 among the data GW 211 and BSs, i.e., the BS #1 213, the BS #2 215, and the BS #3 217 corresponding to the MS 223. The serving BS, i.e., the BS #1 213 generates a MAC Protocol Data Unit (PDU) based on IP packets received through the logical link B3, and transmits the generated MAC PDUs using a MAC layer logical connection, i.e., a logical link between the MS 223 and the cooperative communication cell through a wireless link between the MS 223 and the serving BS 213.

The serving BS 213 can use cooperative communication cell member BSs in order to transmit packets which are transmitted from the data GW 211 and received in the MS 223 through wireless links among the MS 223 and the cooperative communication cell member BSs. The BS #2 215 as a cooperative communication cell member BS generates MAC PDUs based on IP packets which are received through the logical link B2, and transmits the generated MAC PDUs to the MS 223. Here, the BS #2 215 which generates the MAC PDUs is indicated by the serving BS 213.

The BS #3 217 as a cooperative communication cell member BS generates MAC PDUs based on IP packets which are received through the logical link B1, and transmits the generated MAC PDUs to the MS 223. Here, the BS #3 217 which generates the MAC PDUs is indicated by the serving BS 213.

The serving BS 213 cooperatives with cooperative communication cell member BSs in order to determine that IP packets which are transmitted by the data GW 211 and received in the cooperative communication cell member BSs are which IP packets. The serving BS 213 cooperatives with the cooperative communication cell member BSs in order to determine that the IP packets which are transmitted by the data GW 211 and received in the cooperative communication cell member BSs are transmitted from which BSs. In the cooperative communication cell, links among the serving BS and the cooperative communication cell member BSs are used for transferring control information in the downlink.

A MAC & PHYsical (PHY) processing for data transmission is performed by a BS which transmits data to the MS 223 in the downlink. A MAC & PHY processing for data reception is performed by a BS which receives data from the MS 223 in a uplink.

If the cooperative communication cell member BS receives fragmented data, the cooperative communication cell member BS transmits the fragmented data to the serving BS 213. The serving BS 213 performs a re-assembly operation for fragmented data which is received from the cooperative communication cell member BS.

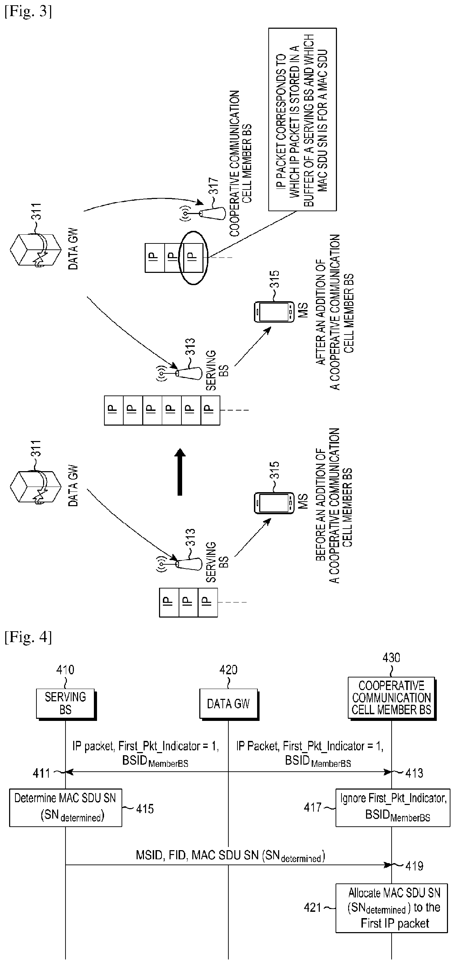

A structure of a cooperative communication system according to an embodiment of the present disclosure has been described with reference to FIG. 2, and a MAC Service Data Unit (SDU) synchronization process in a cooperative communication system according to an embodiment of the present disclosure will be described with reference to FIG. 3.

FIG. 3 schematically illustrates a MAC SDU synchronization process in a cooperative communication system according to an embodiment of the present disclosure.

Referring to FIG. 3, the cooperative communication system includes a data GW 311, a serving BS 313, an MS 315, and a cooperative communication cell member BS 317. In FIG. 3, there is one cooperative communication cell member BS, however, it will be understood by those of ordinary skill in the art that there can be more than two cooperative communication cell member BSs.

The data GW 311 multicasts IP packets which are received through a data bearer to BSs included in a cooperative communication cell.

A MAC layer of each of the BSs generates MAC SDUs by processing IP packets which are received from the data GW 311 through the data bearer. The MAC layer of each of the BSs maps the IP packets which are received through the data bearer to a related MAC layer logical connection. There is one-to-one mapping among the related MAC layer logical connection, a logical link between a related BS and the data GW 311, and a data bearer between the MS 315 and the data GW 311.

The MAC layer of each of the BSs can compress an IP header included in the received IP packet. If a security is activated, the MAC layer of each of the BSs can apply a security function. So, there is a need for a method of synchronizing MAC SDUs of a service flow among BSs included in the cooperative communication cell in order to uniquely identify a MAC SDU among the BSs included in the cooperative communication cell. Here, the MAC SDUs of the service flow are generated based on IP packets of a data bearer.

In an embodiment of the present disclosure, a Sequence Number (SN) is allocated to each IP packet of a data bearer which is mapped to a MAC layer logical channel between the MS 315 and the cooperative communication cell. Each IP packet is transferred using a MAC SDU through the MAC layer logical connection. The SN which is allocated to each IP packet is identical to an SN which is allocated to a MAC SDU which transfers the IP packet.

In an embodiment of the present disclosure, an SN is used for identifying MAC SDUs among BSs included in a cooperative communication cell. As illustrated in Figure 3, IP packets which are stored in a buffer of the cooperative communication cell member BS 317 correspond to a need for determining that which IP packet is stored in a buffer of the serving BS 313 and a need for determining a MAC SDU with which SN. The MAC SDU is used for transferring IP packets stored in the buffer of the cooperative communication cell member BS 317.

The serving BS 313 needs to know that the first IP packet stored in the buffer of the cooperative communication cell member BS 317 corresponds to which IP packet among IP packets stored in the buffer of the serving BS 313.

In an embodiment of the present disclosure, an SN is allocated by the serving BS 313. The serving BS 313 allocates an SN to each IP packet of a data bearer from '0'. IP packets for a data bearer which are received through the logical link among the BSs and the data GW 311 are mapped to a MAC layer logical connection between the MS 315 and the cooperative communication cell.

After a MAC layer logical connection related to the data bearer is activated/ generated, an SN '0' is allocated to the first IP packet which is stored in a MAC layer logical connection queue included in the serving BS 313. The serving BS 313 cooperates with the data GW 311 to allocate an SN to the first IP packet of a data bearer which is received by a cooperative communication cell member BS(s). In an embodiment of the present disclosure, an SN which is allocated by the serving BS 313 to each IP packet for a data bearer is used for identifying a MAC SDU of a MAC layer logical connection associated with the data bearer, and the MAC SDU transfers one IP packet.

A MAC SDU synchronization process in a cooperative communication system according to an embodiment of the present disclosure has been described with reference to FIG. 3, and an example of a MAC SDU synchronization process in a case that a serving BS allocates an SN in a cooperative communication system according to an embodiment of the present disclosure will be described with reference to FIG. 4.

FIG. 4 schematically illustrates an example of a MAC SDU synchronization process in a case that a serving BS allocates an SN in a cooperative communication system according to an embodiment of the present disclosure.

Referring to FIG. 4, the cooperative communication system includes a serving BS 410, a data GW 420, and a cooperative communication cell member BS 430. It will be assumed that the cooperative communication cell member BS 430 is a cooperative communication cell member BS which has been already included in a cooperative communication cell. In FIG. 4, there is one cooperative communication cell member BS, however, it will be understood by those of ordinary skill in the art that there can be more than two cooperative communication cell member BSs.

A logical link between the data GW 420 and a cooperative communication cell member BS which is newly added to the cooperative communication cell is generated for a data bearer while the new cooperative communication cell member BS is added to the cooperative communication cell. For each data bearer in the cooperative communication cell, a logical link multicast group includes logical links which are generated among the data GW 420 and all of BSs included in a updated cooperative communication cell of an MS (not shown in FIG. 4). After a logical link multicast group associated with the data bearer is updated, the data GW 420 transmits control information including a First IP Packet Indicator of which value is set to a preset value, e.g., '1' and a BS Identifier (BSID) of a cooperative communication cell member BS along with the first IP packet of a data bearer which is transmitted in the logical link multicast group associated with the data bearer to the serving BS 410 and the cooperative communication cell member BS 430 at operations 411 and 413. For convenience, a BSID of the cooperative communication cell member BS 430 is called 'BSID_{MemberBS}'.

The serving BS 410 processes the control information including the First_Pkt_Indicator and the BSID_{MemberBS} which are received along with the IP packet of the data bearer at operation 415. The serving BS 410 determines a MAC SDU SN (SN_{determined}) which is allocated to a MAC SDU which transfers the IP packet which is received along with the control information including the First_Pkt_Indicator of which the value is set to '1' and the BSID_{MemberBS} at operation 415. The cooperative communication cell member BS 430 ignores the control information including the First_Pkt_Indicator and the BSID_{MemberBS} at operation 417.

The serving BS 410 transmits Mobile Station Identifier (MSID) of the MS, a flow ID and the determined MAC SDU SN (SN_{determined}) to the cooperative communication cell member BS 430 which is identified by the BSID_{MemberBS} which is received along with the IP packet from the data GW 420 at operation 419.

The cooperative communication cell member BS 430 allocates the MAC SDU SN (SN_{determined}) to the first IP packet which is received from the data GW 420 for a data bearer related to the MAC layer logical connection which is identified by the MSID and the flow ID, and sequentially allocates MAC SDU SNs to other packets at operation 421.

Although FIG. 4 illustrates an example of a MAC SDU synchronization process in a case that a serving BS allocates an SN in a cooperative communication system according to an embodiment of the present disclosure, various changes could be made to FIG. 4. For example, although shown as a series of operations, various operations in FIG. 4 could overlap, occur in parallel, occur in a different order, or occur multiple times.

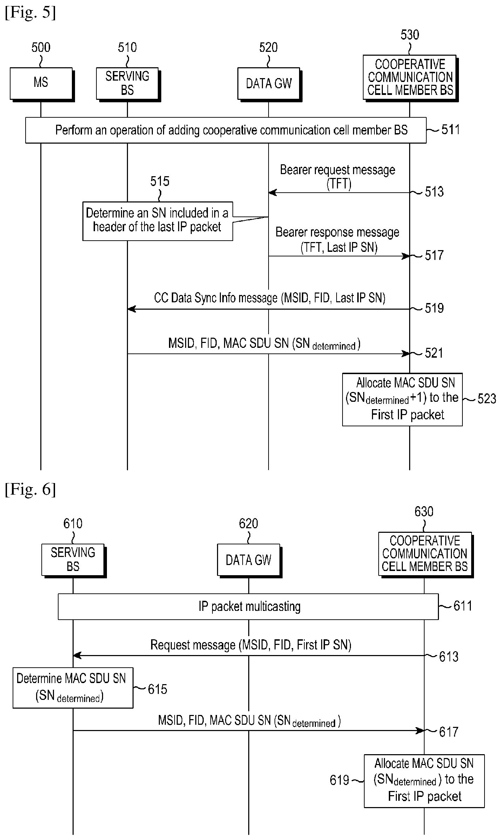

An example of a MAC SDU synchronization process in a case that a serving BS allocates an SN in a cooperative communication system according to an embodiment of the present disclosure has been described with reference to FIG. 4, and another example of a MAC SDU synchronization process in a case that a serving BS allocates an SN in a cooperative communication system according to an embodiment of the present disclosure will be described with reference to FIG. 5.

FIG. 5 schematically illustrates another example of a MAC SDU synchronization process in a case that a serving BS allocates an SN in a cooperative communication system according to an embodiment of the present disclosure.

Referring to FIG. 5, the cooperative communication system includes an MS 500, serving BS 510, a data GW 520, and a cooperative communication cell member BS 530. It will be assumed that the cooperative communication cell member BS 530 is a cooperative communication cell member BS which is newly added to a cooperative communication cell. In FIG. 5, there is one cooperative communication cell member BS, however, it will be understood by those of ordinary skill in the art that there can be more than two cooperative communication cell member BSs.

In FIG. 5, the cooperative communication cell member BS 530 is added to a cooperative communication cell of the MS 500. The serving BS 510 cooperates with the MS 500 to add the cooperative communication cell member BS 530 to the cooperative communication cell at operation 511. After the cooperative communication cell member BS 530 is added to the cooperative communication cell, a new cooperative communication cell member BS, i.e., the cooperative communication cell member BS 530 transmits a bearer request message to the data GW 520 in order to establish a logical link between the data GW 520 and the cooperative communication cell member BS 530 for one or more data bearers between the MS 500 to which the cooperative communication cell provides a service and the data GW 520 at operation 513. The bearer request message includes a TFT.

Upon receiving a bearer request for a data bearer for one or more BSs and logical links which has already been existed from the cooperative communication cell member BS 530, the data GW 520 determines an SN which is included in a header of the last IP packet which is transmitted for the data bearer at operation 515. The data GW 520 transmits a bearer response message including an SN which is allocated to the last IP packet as a response message to the bearer request message to the cooperative communication cell member BS 530 at operation 517. The bearer response message includes a TFT and an SN of the last IP packet.

After receiving the bearer response message, the cooperative communication cell member BS 530 transmits a Cooperative communication Cell Data Synchronization Information (CC Data Sync Info) message including the SN of the last IP packet included in the bearer response message to the serving BS 510 at operation 519. The CC Data Sync Info message further includes an MSID and a flow ID of a MAC layer logical connection related to the data bearer.

After receiving the CC Data Sync Info message, the serving BS 510 determines a MAC SDU SN (SN_{determined}) which is allocated to a MAC SDU which transfers an IP packet with the SN of the last IP packet. The serving BS 510 transmits the MSID, the flow ID, and the determined MAC SDU SN (SN_{determined}) to the cooperative communication cell member BS 530 at operation 521.

After receiving the MSID, the flow ID, and the MAC SDU SN (SN_{determined}), the cooperative communication cell member BS 530 allocates a MAC SDU SN (SN_{determined} +1) to the first IP packet which is received from the data GW 520 for a data bearer related to a MAC layer logical connection which is identified by the MSID and the flow ID. The cooperative communication cell member BS 530 sequentially allocates MAC SDU SNs to other IP packets at operation 523.

Although FIG. 5 illustrates another example of a MAC SDU synchronization process in a case that a serving BS allocates an SN in a cooperative communication system according to an embodiment of the present disclosure, various changes could be made to FIG. 5. For example, although shown as a series of operations, various operations in FIG. 5 could overlap, occur in parallel, occur in a different order, or occur multiple times.

Another example of a MAC SDU synchronization process in a case that a serving BS allocates an SN in a cooperative communication system according to an embodiment of the present disclosure has been described with reference to FIG. 5, and still another example of a MAC SDU synchronization process in a case that a serving BS allocates an SN in a cooperative communication system according to an embodiment of the present disclosure will be described with reference to FIG. 6.

FIG. 6 schematically illustrates still another example of a MAC SDU synchronization process in a case that a serving BS allocates an SN in a cooperative communication system according to an embodiment of the present disclosure.

Referring to FIG. 6, the cooperative communication system includes a serving BS 610, a data GW 620, and a cooperative communication cell member BS 630. It will be assumed that the cooperative communication cell member BS 630 is a cooperative communication cell member BS which has been already included in a cooperative communication cell. In FIG. 6, there is one cooperative communication cell member BS, however, it will be understood by those of ordinary skill in the art that there can be more than two cooperative communication cell member BSs.

The data GW 620 multicasts IP packets of a data bearer to BSs included in a cooperative communication cell, i.e., the serving BS 610 and the cooperative communication cell member BS 630 at operation 611.

After receiving the first IP packet from the data GW 620 in a logical link between a BS and the data GW 620 related to the data bearer, the cooperative communication cell member BS 630 transmits a request message including an MSID and a flow ID of a MAC layer logical connection related to the data bearer, and an SN of the received first IP packet to the serving BS 610 at operation 613.

After receiving the request message from the cooperative communication cell member BS 630, the serving BS 610 determines MAC SDU SN (SN_{determined}) which is allocated to a MAC SDU which transfers an IP packet with an SN of the IP packet received from the cooperative communication cell member BS 630 at operation 615.

The serving BS 610 transmits the MSID, the flow ID and the determined MAC SDU SN (SN_{determined}) to the cooperative communication cell member BS 630 at operation 617.

The cooperative communication cell member BS 630 allocates a MAC SDU SN (SN determined) to the first IP packet of the data bear which is received from the data GW 520 for the data bearer related to the MAC layer logical connection which is identified by the MSID and the flow ID. The cooperative communication cell member BS 630 sequentially allocates MAC SDU SNs to other IP packets at operation 619.

Although FIG. 6 illustrates still another example of a MAC SDU synchronization process in a case that a serving BS allocates an SN in a cooperative communication system according to an embodiment of the present disclosure, various changes could be made to FIG. 6. For example, although shown as a series of operations, various operations in FIG. 6 could overlap, occur in parallel, occur in a different order, or occur multiple times.

A MAC SDU synchronization method that a serving BS allocates an SN in a cooperative communication system in FIGS. 4 to 6 will be summarized below.

Firstly, BSs included in a cooperative communication cell use a MAC SDU SN which is used for identifying data packets of a data bearer.

Secondly, a serving BS among a plurality of BSs included in the cooperative communication cell allocates a MAC SDU SN.

Thirdly, a signalling and MAC SDU SN among a cooperative communication cell member BS, a data GW, and a cooperative communication cell for identifying the first IP packet which is received by the cooperative communication cell member BS are determined.

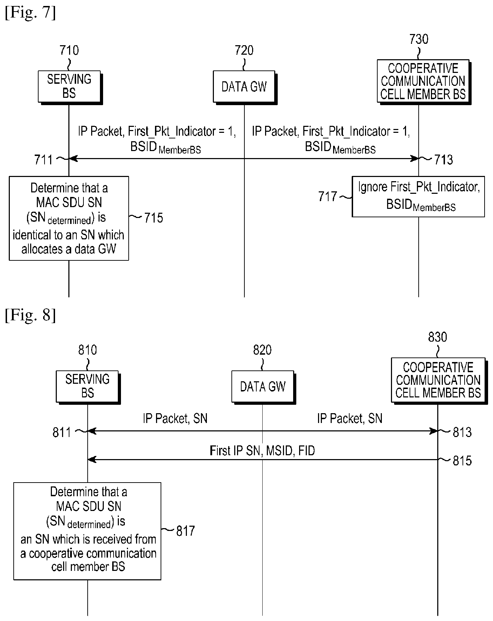

A MAC SDU synchronization method that a serving BS allocates an SN in a cooperative communication system according to an embodiment of the present disclosure has been described with reference to FIGS. 4 to 6, and a MAC SDU synchronization method that a data GW allocates an SN in a cooperative communication system according to an embodiment of the present disclosure will be described with reference to FIGS. 7 to 8.

An example of a MAC SDU synchronization process in a case that a data GW allocates an SN in a cooperative communication system according to an embodiment of the present disclosure will be described with reference to FIG. 7.

FIG. 7 schematically illustrates an example of a MAC SDU synchronization process in a case that a data GW allocates an SN in a cooperative communication system according to an embodiment of the present disclosure.

Referring to FIG. 7, the cooperative communication system includes a serving BS 710, a data GW 720, and a cooperative communication cell member BS 730. It will be assumed that the cooperative communication cell member BS 730 is a cooperative communication cell member BS which has been already included in a cooperative communication cell. In FIG. 7, there is one cooperative communication cell member BS, however, it will be understood by those of ordinary skill in the art that there can be more than two cooperative communication cell member BSs.

The data GW 720 allocates an SN to each IP packet of a data bearer from '0'. If the data bearer is activated, an SN '0' is allocated to the first IP packet which is stored in a data bearer queue. The serving BS 710 and a cooperative communication cell member BS(s) receive an SN along with an IP packet from the data GW 720. The serving BS 710 needs to know an SN of the first IP packet of the data bearer which is received by the cooperative communication cell member BS(s).

A logical link between the data GW 720 and a cooperative communication cell member BS which is newly added to the cooperative communication cell is generated for a data bearer while the new cooperative communication cell member BS is added to the cooperative communication cell. For each data bearer in the cooperative communication cell, a logical link multicast group includes logical links which are generated among the data GW 720 and all of BSs included in a updated cooperative communication cell of an MS (not shown in FIG. 7).

After a logical link multicast group associated with the data bearer is updated, the data GW 720 transmits control information including a First IP Packet Indicator of which a value is set to a preset value, e.g., '1' and a BSID of a cooperative communication cell member BS along with the first IP packet of a data bearer which is transmitted in the logical link multicast group associated with the data bearer and to the serving BS 710 and the cooperative communication cell member BS 730 at operations 711 and 713.

The serving BS 710 processes the control information including the First_Pkt_Indicator and the BSID_{MemberBS}. The serving BS 410 determines that a MAC SDU SN (SN_{determined}) which is allocated to a MAC SDU which transfers the IP packet which is received along with the control information including the First_Pkt_Indicator of which a value is set to '1' and the BSID_{MemberBs} is identical to an SN which the data GW 710 allocates for the IP packet at operation 715.

The cooperative communication cell member BS 730 ignores the control information including the First_Pkt_Indicator and the BSID_{MemberBs} at operation 717.

Although FIG. 7 illustrates an example of a MAC SDU synchronization process in a case that a data GW allocates an SN in a cooperative communication system according to an embodiment of the present disclosure, various changes could be made to FIG. 7. For example, although shown as a series of operations, various operations in FIG. 7 could overlap, occur in parallel, occur in a different order, or occur multiple times.

An example of a MAC SDU synchronization process in a case that a data GW allocates an SN in a cooperative communication system according to an embodiment of the present disclosure has been described with reference to FIG. 7, and another example of a MAC SDU synchronization process in a case that a data GW allocates an SN in a cooperative communication system according to an embodiment of the present disclosure will be described with reference to FIG. 8.

FIG. 8 schematically illustrates another example of a MAC SDU synchronization process in a case that a data GW allocates an SN in a cooperative communication system according to an embodiment of the present disclosure.

Referring to FIG. 8, the cooperative communication system includes a serving BS 810, a data GW 820, and a cooperative communication cell member BS 830. It will be assumed that the cooperative communication cell member BS 830 is a cooperative communication cell member BS which has been already included in a cooperative communication cell. In FIG. 8, there is one cooperative communication cell member BS, however, it will be understood by those of ordinary skill in the art that there can be more than two cooperative communication cell member BSs.

The data GW 820 multicasts IP packets of a data bearer to BSs included in a cooperative communication cell at operation 611. Here, SNs which the data GW 820 allocates are allocated to the IP packets transmitted in the data GW 820.

After receiving the first IP packet of the data bearer from the data GW 820, the cooperative communication cell member BS 830 transmits an SN of the first IP packet along with an MSID and a flow ID of a MAC layer logical connection associated with the data bearer to the serving BS 810 at operation 815.

The serving BS 810 determines that a MAC SDU SN (SN_{determined}) which is allocated to a MAC SDU which transfers the first IP packet of a data bearer in the cooperative communication cell member BS 830 is the SN which is received from the cooperative communication cell member BS 830 at operation 817.

Although FIG. 8 illustrates another example of a MAC SDU synchronization process in a case that a data GW allocates an SN in a cooperative communication system according to an embodiment of the present disclosure, various changes could be made to FIG. 8. For example, although shown as a series of operations, various operations in FIG. 8 could overlap, occur in parallel, occur in a different order, or occur multiple times.

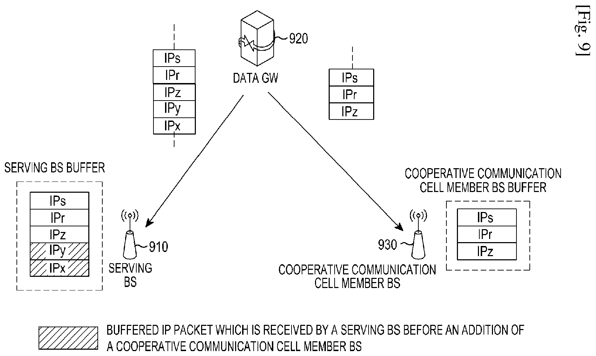

Another example of a MAC SDU synchronization process in a case that a data GW allocates an SN in a cooperative communication system according to an embodiment of the present disclosure has been described with reference to FIG. 8, and a buffer synchronization process in a cooperative communication system according to an embodiment of the present disclosure will be with reference to FIG. 9.

FIG. 9 schematically illustrates a buffer synchronization process in a cooperative communication system according to an embodiment of the present disclosure.

Referring to FIG. 9, the cooperative communication system includes a serving BS 910, a data GW 920, and a cooperative communication cell member BS 930. It will be assumed that the cooperative communication cell member BS 930 is a cooperative communication cell member BS which is newly added to a cooperative communication cell. In FIG. 9, there is one cooperative communication cell member BS, however, it will be understood by those of ordinary skill in the art that there can be more than two cooperative communication cell member BSs.

As illustrated in FIG. 9, after the cooperative communication cell member BS 930 is newly added to the cooperative communication cell, there can be IP packets which are received before the cooperative communication cell member BS 930 is newly added and buffered in a buffer of the serving BS 910. In this case, contents which are buffered in a buffer of the cooperative communication cell member BS 930 are different from contents which are buffered in a buffer which a cooperative communication cell manages, i.e., the buffer of the serving BS 910. In one embodiment of the present disclosure, if a new BS, i.e., a new cooperative communication cell member BS is added to a cooperative communication cell, there is a need for synchronizing buffers of BSs included in the cooperative communication cell.

In one embodiment of the present disclosure, the serving BS 910 can transmit additional IP packets which are buffered in the buffer of the serving BS 910 to the cooperative communication cell member BS 930. The serving BS 910 can know the first IP packet which is received by the cooperative communication cell member BS 930 after a cooperative communication cell update (a update using a MAC SDU synchronization process in FIGS. 3 to 8).

The serving BS 910 also knows buffered IP packets of which SNs are less than the SN of the first IP packet which is received by the cooperative communication cell member BS 930. The serving BS 910 can directly transmit the buffered IP packets of which the SNs are less than the SN of the first IP packet which is received by the cooperative communication cell member BS 930 to the cooperative communication cell member BS 930 through a serving BS-cooperative communication cell member BS link.

On the other hand, the serving BS 910 can transmit the buffered IP packets of which the SNs are less than the SN of the first IP packet which is received by the cooperative communication cell member BS 930 via the data GW 920 (i.e., via a path from the serving BS 910 to the data GW 920 and from the data GW 920 to the cooperative communication cell member BS 930).

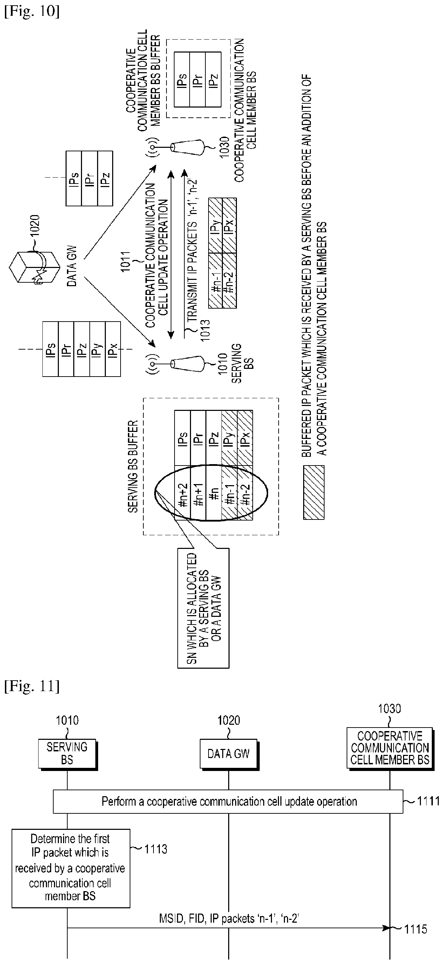

A buffer synchronization process in a cooperative communication system according to an embodiment of the present disclosure has been described with reference to FIG. 9, and an example of a buffer synchronization process in a cooperative communication system according to an embodiment of the present disclosure will be described with reference to FIG. 10.

FIG. 10 schematically illustrates an example of a buffer synchronization process in a cooperative communication system according to an embodiment of the present disclosure.

Referring to FIG. 10, the cooperative communication system includes a serving BS 1010, a data GW 1020, and a cooperative communication cell member BS 1030. It will be assumed that the cooperative communication cell member BS 1030 is a cooperative communication cell member BS which is newly added to a cooperative communication cell. In FIG. 10, there is one cooperative communication cell member BS, however, it will be understood by those of ordinary skill in the art that there can be more than two cooperative communication cell member BSs.

After a cooperative communication cell update using a MAC SDU synchronization process, i.e., a MAC SDU synchronization process in FIGS. 3 to 8, the serving BS 1010 determines the first IP packet which is received by the cooperative communication cell member BS 1030 at operation 1011. The serving BS 1010 transmits IP packets which are buffered in a buffer of the serving BS 1010 of which SNs are less than a SN of the first IP packet which is received by the cooperative communication cell member BS 1030, i.e., IP packets 'n-1', 'n-2' to the cooperative communication cell member BS 1030 at operation 1013.

An example of a buffer synchronization process in a cooperative communication system according to an embodiment of the present disclosure has been described with reference to FIG. 10, and a signal transmitting/receiving process in a cooperative communication system according to an example of a buffer synchronization process in FIG. 10 will be described with reference to FIG. 11.

FIG. 11 schematically illustrates a signal transmitting/receiving process in a cooperative communication system according to an example of a buffer synchronization process in FIG. 10.

Referring to FIG. 11, the cooperative communication system includes a serving BS 1010, a data GW 1020, and a cooperative communication cell member BS 1030. It will be assumed that the cooperative communication cell member BS 1030 is a cooperative communication cell member BS which is newly added to a cooperative communication cell. In FIG. 11, there is one cooperative communication cell member BS, however, it will be understood by those of ordinary skill in the art that there can be more than two cooperative communication cell member BSs.

The serving BS 1010 performs a cooperative communication cell update operation which uses a MAC SDU synchronization process, i.e., a MAC SDU synchronization process in FIGS. 3 to 8 at operation 1111. The serving BS 1010 determines the first IP packet which is received by the cooperative communication cell member BS 1030 at operation 1113. The serving BS 1010 transmits IP packets which are buffered in a buffer of the serving BS 1010 of which SNs are less than a SN of the first IP packet which is received by the cooperative communication cell member BS 1030, i.e., IP packets 'n-1', 'n-2' to the cooperative communication cell member BS 1030 at operation 1115. Here, the IP packets 'n-1', 'n-2' are transmitted along with an MSID and a flow ID.

Although FIG. 11 illustrates a signal transmitting/receiving process in a cooperative communication system according to an example of a buffer synchronization process in FIG. 10, various changes could be made to FIG. 11. For example, although shown as a series of operations, various operations in FIG. 11 could overlap, occur in parallel, occur in a different order, or occur multiple times.

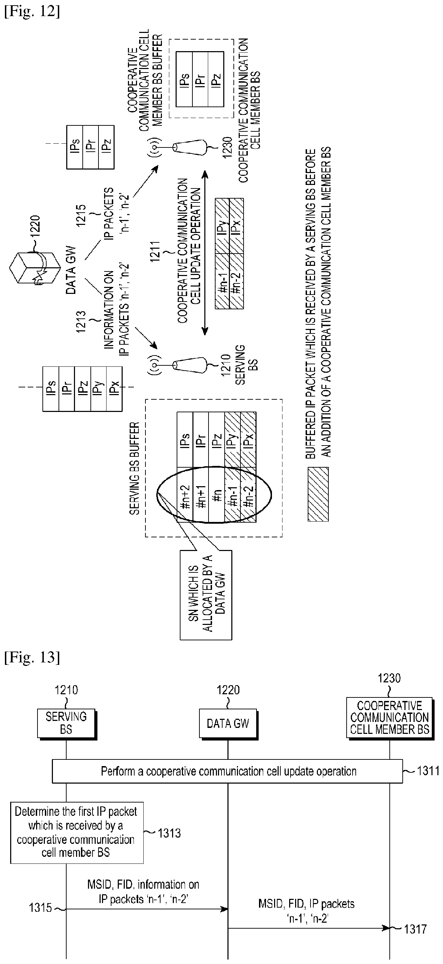

A signal transmitting/receiving process in a cooperative communication system according to an example of a buffer synchronization process in FIG. 10 has been described with reference to FIG. 11, and another example of a buffer synchronization process in a cooperative communication system according to an embodiment of the present disclosure will be described with reference to FIG. 12.

FIG. 12 schematically illustrates another example of a buffer synchronization process in a cooperative communication system according to an embodiment of the present disclosure.

Referring to FIG. 12, the cooperative communication system includes a serving BS 1210, a data GW 1220, and a cooperative communication cell member BS 1230. It will be assumed that the cooperative communication cell member BS 1230 is a cooperative communication cell member BS which is newly added to a cooperative communication cell. In FIG. 12, there is one cooperative communication cell member BS, however, it will be understood by those of ordinary skill in the art that there can be more than two cooperative communication cell member BSs.

The data GW 1220 transmits IP packet which are buffered in a buffer of the serving BS 1210 to the cooperative communication cell member BS 1230. The data GW 1220 knows the first IP packet which will be transmitted to the cooperative communication cell member BS 1230 after performing a cooperative communication cell updated operation.

However, the data GW 1220 does not know IP packets which are buffered in a buffer of the cooperative communication cell member BS 1230 of which SNs are less than an SN of the first IP packet which is received by the cooperative communication cell member BS 1230. So, the data GW 1220 requests that information on the buffered IP packets of which the SNs are less than the SN of the first IP packet which is received by the cooperative communication cell member BS 1230 is notified to the data GW 1220.

The data GW 1220 needs to store IP packets in order to re-transmit some IP packets to new cooperative communication cell member BSs while the data GW 1220 transmits the IP packets to the new cooperative communication cell member BSs.

In an embodiment of the present disclosure, after performing a cooperative communication cell update operation using a MAC SDU synchronization process, i.e., a MAC SDU synchronization process in FIGS. 3 to 8, the serving BS 1210 determines the first IP packet which is received by the cooperative communication cell member BS 1230 at operation 1211. The serving BS 1210 transfers information on IP packets which are buffered in a buffer of the serving BS 1210 of which SNs are less than a SN of the first IP packet which is received by the cooperative communication cell member BS 1230, i.e., IP packets 'n-1', 'n-2' to the data GW 1220 at operation 1213. The data GW 1220 transmits the IP packets 'n-1', 'n-2' to the cooperative communication cell member BS 1230 at operation 1215.

Another example of a buffer synchronization process in a cooperative communication system according to an embodiment of the present disclosure has been described with reference to FIG. 12, and a signal transmitting/receiving process in a cooperative communication system according to another example of a buffer synchronization process in FIG. 12 will be described with reference to FIG. 13.

FIG. 13 schematically illustrates a signal transmitting/receiving process in a cooperative communication system according to another example of a buffer synchronization process in FIG. 12.

Referring to FIG. 13, the cooperative communication system includes a serving BS 1210, a data GW 1220, and a cooperative communication cell member BS 1230. It will be assumed that the cooperative communication cell member BS 1230 is a cooperative communication cell member BS which is newly added to a cooperative communication cell. In FIG. 13, there is one cooperative communication cell member BS, however, it will be understood by those of ordinary skill in the art that there can be more than two cooperative communication cell member BSs.

The serving BS 1210 performs a cooperative communication cell update operation which uses a MAC SDU synchronization process, i.e., a MAC SDU synchronization process in FIGS. 3 to 8 at operation 1311. The serving BS 1210 determines the first IP packet which is received by the cooperative communication cell member BS 1230 at operation 1313. The serving BS 1210 transfers information on IP packets which are buffered in a buffer of the serving BS 1210 of which SNs are less than a SN of the first IP packet which is received by the cooperative communication cell member BS 1230, i.e., IP packets 'n-1', 'n-2' to the data GW 1220 at operation 1315. Here, the IP packets 'n-1', 'n-2' are transferred along with an MSID and a flow ID.

After receiving the information on the IP packets 'n-1', 'n-2' from the serving BS 1210, the data GW 1220 transmits the IP packets 'n-1', 'n-2' to the cooperative communication cell member BS 1230 at operation 1317. Here, the IP packets 'n-1', 'n-2' are transferred along with the MSID and the flow ID.

Although FIG. 13 illustrates a signal transmitting/receiving process in a cooperative communication system according to another example of a buffer synchronization process in FIG. 12, various changes could be made to FIG. 13. For example, although shown as a series of operations, various operations in FIG. 13 could overlap, occur in parallel, occur in a different order, or occur multiple times.

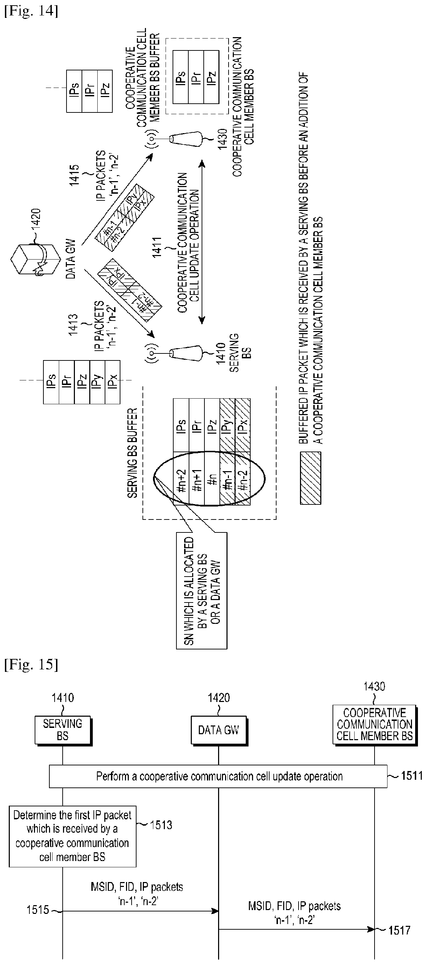

A signal transmitting/receiving process in a cooperative communication system according to another example of a buffer synchronization process in FIG. 12 has been described with reference to FIG. 13, and still another example of a buffer synchronization process in a cooperative communication system according to an embodiment of the present disclosure will be described with reference to FIG. 14.

FIG. 14 schematically illustrates still another example of a buffer synchronization process in a cooperative communication system according to an embodiment of the present disclosure.

Referring to FIG. 14, the cooperative communication system includes a serving BS 1410, a data GW 1420, and a cooperative communication cell member BS 1430. It will be assumed that the cooperative communication cell member BS 1430 is a cooperative communication cell member BS which is newly added to a cooperative communication cell. In FIG. 14, there is one cooperative communication cell member BS, however, it will be understood by those of ordinary skill in the art that there can be more than two cooperative communication cell member BSs.

In one embodiment of the present disclosure, the serving BS 1410 can transmit additional IP packets which are buffered in a buffer of the serving BS 1410 to the cooperative communication cell member BS 1430 through the data GW 1420. The serving BS 1410 knows the first IP packet which is received by the cooperative communication cell member BS 1430 after performing a cooperative communication cell update operation, i.e., a cooperative communication cell update operation which uses a MAC SDU synchronization process in FIGS. 3 to 8.

The serving BS 1410 knows buffered IP packets of which SNs are less than an SN of the first IP packet which is received by the cooperative communication cell member BS 1430. The serving BS 1410 transmits the buffered IP packets of which the SNs are less than the SN of the first IP packet which is received by the cooperative communication cell member BS 1430 through the data GW 1420 (through a path from the serving BS 1410 to the data GW 1420 and from the data GW 1420 to the cooperative communication cell member BS 1430).

After performing a cooperative communication cell update operation using a MAC SDU synchronization process in FIGS. 3 to 8, the serving BS 1410 determines the first IP packet which is received by the cooperative communication cell member BS 1430 at operation 1411. The serving BS 1410 transmits IP packets which are buffered in a buffer of the serving BS 1410 of which SNs are less than a SN of the first IP packet which is received by the cooperative communication cell member BS 1430, i.e., IP packets 'n-1', 'n-2' to the data GW 1420 at operation 1413.

The data GW 1420 transmits the IP packets which are received from the serving BS 1410 to the cooperative communication cell member BS 1430 at operation 1415.

Still another example of a buffer synchronization process in a cooperative communication system according to an embodiment of the present disclosure has been described with reference to FIG. 14, and a signal transmitting/receiving process in a cooperative communication system according to still another example of a buffer synchronization process in FIG. 14 will be described with reference to FIG. 15.

FIG. 15 schematically illustrates a signal transmitting/receiving process in a cooperative communication system according to still another example of a buffer synchronization process in FIG. 14.

Referring to FIG. 15, the cooperative communication system includes a serving BS 1410, a data GW 1420, and a cooperative communication cell member BS 1430. It will be assumed that the cooperative communication cell member BS 1430 is a cooperative communication cell member BS which is newly added to a cooperative communication cell. In FIG. 15, there is one cooperative communication cell member BS, however, it will be understood by those of ordinary skill in the art that there can be more than two cooperative communication cell member BSs.

The serving BS 1410 performs a cooperative communication cell update operation which uses a MAC SDU synchronization process, i.e., a MAC SDU synchronization process in FIGS. 3 to 8 at operation 1511. The serving BS 1410 determines the first IP packet which is received by the cooperative communication cell member BS 1430 at operation 1513. The serving BS 1410 transfers IP packets which are buffered in a buffer of the serving BS 1410 of which SNs are less than a SN of the first IP packet which is received by the cooperative communication cell member BS 1430, i.e., IP packets 'n-1', 'n-2' to the data GW 1420 at operation 1515. Here, the IP packets 'n-1', 'n-2' are transferred along with an MSID and a flow ID.

After receiving the IP packets 'n-1', 'n-2' from the serving BS 1410, the data GW 1420 transmits the IP packets 'n-1', 'n-2' to the cooperative communication cell member BS 1430 at operation 1517. Here, the IP packets 'n-1', 'n-2' are transferred along with the MSID and the flow ID.

Further, in one embodiment of the present disclosure, a serving BS can delay a data scheduling which uses a cooperative communication cell member BS until a transmission for IP packets which are not received by the cooperative communication cell member BS is completed, or a serving BS is capable to use the cooperative communication cell member BS for scheduling IP packets which are received by the cooperative communication cell member BS. In this case, there is no need for transmitting buffered IP packets to the cooperative communication cell member BS. In another embodiment of the present disclosure, a serving BS can previously add a cooperative communication cell member BS in order that a transmission of IP packets which are received by the cooperative communication cell member BS is completed until the serving BS determines to use the cooperative communication cell member BS.

In this case, there is no need for transmitting buffered IP packets to the cooperative communication cell member BS. In other embodiment of the present disclosure, the serving BS can previously add the cooperative communication cell member BS in order to complete a transmission of the IP packets which are received by the cooperative communication cell member BS until the serving BS determines to use the cooperative communication cell member BS.

Although FIG. 15 illustrates a signal transmitting/receiving process in a cooperative communication system according to still another example of a buffer synchronization process in FIG. 14, various changes could be made to FIG. 15. For example, although shown as a series of operations, various operations in FIG. 15 could overlap, occur in parallel, occur in a different order, or occur multiple times.

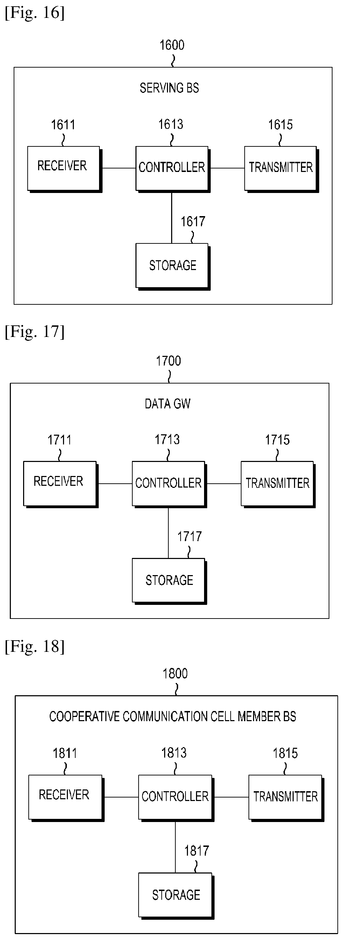

A signal transmitting/receiving process in a cooperative communication system according to still another example of a buffer synchronization process in FIG. 14 has been described with reference to FIG. 15, and an inner structure of a serving BS in a cooperative communication system according to an embodiment of the present disclosure will be described with reference to FIG. 16.

FIG. 16 schematically illustrates an inner structure of a serving BS in a cooperative communication system according to an embodiment of the present disclosure.

Referring to FIG. 16, a serving BS 1600 includes a receiver 1611, a controller 1613, a transmitter 1615, and a storage 1617.

The controller 1613 controls the overall operation of the serving BS 1600. More particularly, the controller 1613 controls the serving BS 1600 to perform an operation related to data synchronization according to an embodiment of the present disclosure, i.e., an operation related to MAC SDU synchronization and buffer synchronization. The operation related to the MAC SDU synchronization and the buffer synchronization is performed in the manner described with reference to FIGS. 3 to 15 and a description thereof will be omitted herein.

The receiver 1611 receives various messages, and the like from an MS, a cooperative communication cell member BS, a data GW, and the like under a control of the controller 1613. The various messages, and the like received in the receiver 1611 have been described in FIGS. 3 to 15 and a description thereof will be omitted herein.

The transmitter 1615 transmits various messages, and the like to an MS, a cooperative communication cell member BS, a data GW, and the like under a control of the controller 1613. The various messages, and the like transmitted in the transmitter 1615 have been described in FIGS. 3 to 15 and a description thereof will be omitted herein.

The storage 1617 stores the various messages, and the like received in the receiver 1611, various data necessary for an operation of the serving BS 1600, e.g., information related to the MAC SDU synchronization operation and the buffer synchronization operation, and the like.

While the receiver 1611, the controller 1613, the transmitter 1615, and the storage 1617 are shown in FIG. 16 as separate units, it is to be understood that this is merely for convenience of description. In other words, two or more of the receiver 1611, the controller 1613, the transmitter 1615, and the storage 1617 can be incorporated into a single unit.

An inner structure of a serving BS in a cooperative communication system according to an embodiment of the present disclosure has been described with reference to FIG. 16, and an inner structure of a data GW in a cooperative communication system according to an embodiment of the present disclosure will be described with reference to FIG. 17.

FIG. 17 schematically illustrates an inner structure of a data GW in a cooperative communication system according to an embodiment of the present disclosure.

Referring to FIG. 17, a data GW 1700 includes a receiver 1711, a controller 1713, a transmitter 1715, and a storage 1717.

The controller 1713 controls the overall operation of the data GW 1700. More particularly, the controller 1713 controls the data GW 1700 to perform an operation related to data synchronization according to an embodiment of the present disclosure, i.e., an operation related to MAC SDU synchronization and buffer synchronization. The operation related to the MAC SDU synchronization and the buffer synchronization is performed in the manner described with reference to FIGS. 3 to 15 and a description thereof will be omitted herein.

The receiver 1711 receives various messages, and the like from an MS, a serving BS, a cooperative communication cell member BS, and the like under a control of the controller 1713. The various messages, and the like received in the receiver 1711 have been described in FIGS. 3 to 15 and a description thereof will be omitted herein.

The transmitter 1715 transmits various messages, and the like to an MS, a serving BS, a cooperative communication cell member BS, and the like under a control of the controller 1713. The various messages, and the like transmitted in the transmitter 1715 have been described in FIGS. 3 to 15 and a description thereof will be omitted herein.

The storage 1717 stores the various messages, and the like received in the receiver 1711, various data necessary for an operation of the data GW 1700, e.g., information related to the MAC SDU synchronization operation and the buffer synchronization operation, and the like.

While the receiver 1711, the controller 1713, the transmitter 1715, and the storage 1717 are shown in FIG. 17 as separate units, it is to be understood that this is merely for convenience of description. In other words, two or more of the receiver 1711, the controller 1713, the transmitter 1715, and the storage 1717 can be incorporated into a single unit.

An inner structure of a data GW in a cooperative communication system according to an embodiment of the present disclosure has been described with reference to FIG. 17, and an inner structure of a cooperative communication cell member BS in a cooperative communication system according to an embodiment of the present disclosure will be described with reference to FIG. 18.

FIG. 18 schematically illustrates an inner structure of a cooperative communication cell member BS in a cooperative communication system according to an embodiment of the present disclosure.

Referring to FIG. 18, a cooperative communication cell member BS 1800 includes a receiver 1811, a controller 1813, a transmitter 1815, and a storage 1817.

The controller 1813 controls the overall operation of the cooperative communication cell member BS 1800. More particularly, the controller 1813 controls the cooperative communication cell member BS 1800 to perform an operation related to data synchronization according to an embodiment of the present disclosure, i.e., an operation related to MAC SDU synchronization and buffer synchronization. The operation related to the MAC SDU synchronization and the buffer synchronization is performed in the manner described with reference to FIGS. 3 to 15 and a description thereof will be omitted herein.

The receiver 1811 receives various messages, and the like from an MS, a serving BS, a data GW, and the like under a control of the controller 1813. The various messages, and the like received in the receiver 1811 have been described in FIGS. 3 to 15 and a description thereof will be omitted herein.

The transmitter 1815 transmits various messages, and the like to an MS, a serving BS, a data GW, and the like under a control of the controller 1813. The various messages, and the like transmitted in the transmitter 1815 have been described in FIGS. 3 to 15 and a description thereof will be omitted herein.

The storage 1817 stores the various messages, and the like received in the receiver 1811, various data necessary for an operation of the cooperative communication cell member BS 1800, e.g., information related to the MAC SDU synchronization operation and the buffer synchronization operation, and the like.

While the receiver 1811, the controller 1813, the transmitter 1815, and the storage 1817 are shown in FIG. 18 as separate units, it is to be understood that this is merely for convenience of description. In other words, two or more of the receiver 1811, the controller 1813, the transmitter 1815, and the storage 1817 can be incorporated into a single unit.

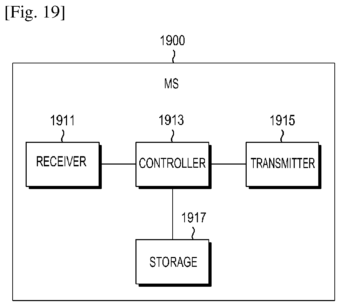

An inner structure of a cooperative communication cell member BS in a cooperative communication system according to an embodiment of the present disclosure has been described with reference to FIG. 18, and an inner structure of an MS in a cooperative communication system according to an embodiment of the present disclosure will be described with reference to FIG. 19.

FIG. 19 schematically illustrates an inner structure of an MS in a cooperative communication system according to an embodiment of the present disclosure.

Referring to FIG. 19, an MS 1900 includes a receiver 1911, a controller 1913, a transmitter 1915, and a storage 1917.

The controller 1913 controls the overall operation of the MS 1900. More particularly, the controller 1913 controls the MS 1900 to perform an operation related to data synchronization according to an embodiment of the present disclosure, i.e., an operation related to MAC SDU synchronization and buffer synchronization. The operation related to the MAC SDU synchronization and the buffer synchronization is performed in the manner described with reference to FIGS. 3 to 15 and a description thereof will be omitted herein.

The receiver 1911 receives various messages, and the like from a serving BS, a cooperative communication cell member BS, a data GW, and the like under a control of the controller 1913. The various messages, and the like received in the receiver 1911 have been described in FIGS. 3 to 15 and a description thereof will be omitted herein.

The transmitter 1915 transmits various messages, and the like to a serving BS, a cooperative communication cell member BS, a data GW, and the like under a control of the controller 1913. The various messages, and the like transmitted in the transmitter 1915 have been described in FIGS. 3 to 15 and a description thereof will be omitted herein.

The storage 1917 stores the various messages, and the like received in the receiver 1911, various data necessary for an operation of the MS 1900, e.g., information related to the MAC SDU synchronization operation and the buffer synchronization operation, and the like.

While the receiver 1911, the controller 1913, the transmitter 1915, and the storage 1917 are shown in FIG. 19 as separate units, it is to be understood that this is merely for convenience of description. In other words, two or more of the receiver 1911, the controller 1913, the transmitter 1915, and the storage 1917 can be incorporated into a single unit.

Certain aspects of the present disclosure can also be embodied as computer readable code on a computer readable recording medium. A computer readable recording medium is any data storage device that can store data, which can be thereafter read by a computer system. Examples of the computer readable recording medium include Read-Only Memory (ROM), Random-Access Memory (RAM), CD-ROMs, magnetic tapes, floppy disks, optical data storage devices, and carrier waves (such as data transmission through the Internet). The computer readable recording medium can also be distributed over network coupled computer systems so that the computer readable code is stored and executed in a distributed fashion. Also, functional programs, code, and code segments for accomplishing the present disclosure can be easily construed by programmers skilled in the art to which the present disclosure pertains.

It can be appreciated that a method and apparatus according to an embodiment of the present disclosure can be implemented by hardware, software and/or a combination thereof. The software can be stored in a non-volatile storage, for example, an erasable or re-writable Read Only Memory (ROM), a memory, for example, a Random Access Memory (RAM, a memory chip, a memory device, or a memory Integrated Circuit (IC), or an optically or magnetically recordable non-transitory machine-readable, e.g., computer-readable, storage medium, e.g., a Compact Disk (CD), a Digital Versatile Disk (DVD), a magnetic disk, or a magnetic tape. A method and apparatus according to an embodiment of the present disclosure can be implemented by a computer or a mobile terminal that includes a controller and a memory, and the memory can be an example of a non-transitory machine-readable, e.g., computer-readable, storage medium suitable to store a program or programs including instructions for implementing various embodiments of the present disclosure.

The present disclosure can include a program including code for implementing the apparatus and method as defined by the appended claims, and a non-transitory machine-readable, e.g., computer-readable, storage medium storing the program. The program can be electronically transferred via any media, such as communication signals, which are transmitted through wired and/or wireless connections, and the present disclosure can include their equivalents.

An apparatus according to an embodiment of the present disclosure may receive the program from a program providing device which is connected to the apparatus via a wire or a wireless and store the program. The program providing device may include a memory for storing instructions which instruct to perform a contents protect method which has been already installed, information necessary for the contents protect method, and the like, a communication unit for performing a wired or a wireless communication with a graphic processing device, and a controller for transmitting a related program to a transmitting/receiving device based on a request of the graphic processing device or automatically transmitting the related program to the transmitting/receiving device.

## Claims

1. An operating method of a serving base station, BS, (410) in a communication system, the operating method comprising:
adding, by the serving BS (410), a secondary BS (430) to a cooperative communication cell of the communication system; and
transmitting (419), to the added secondary BS (430),
a message including a mobile station, MS identifier, ID, a flow ID for an MS, and a sequence number, SN of at least one medium access control service data unit MAC SDU, processed by the serving BS (410), after adding the secondary BS (430),
wherein the flow ID for the MS is related to a bearer with a quality of a service for the MS,
wherein the SN is allocated at the serving BS (410),
wherein the secondary BS (430) assigns the SN to a first IP packet which is received from the data gateway, GW, for a data bearer identified by the MS ID and the flow ID.

2. An operating method of a secondary base station, BS, (430) in a communication system, the operating method comprising:
determining that the secondary BS(430) is added to a cooperative communication cell of the communication system by a serving BS (410); and
receiving, from the serving BS (410), a message including a mobile station, MS, identifier, ID, a flow ID for an MS, and a sequence number, SN of at least one medium access control service data unit, MAC SDU, processed in the serving BS (410),
wherein the flow ID for the MS is related to a bearer with a quality of a service for the MS,
wherein the SN is allocated at the serving BS (410),
wherein the secondary BS (430) assigns the SN to a first IP packet which is received from the data gateway, GW, for a data bearer identified by the MS ID and the flow ID.

3. A serving base station, BS, (410) adapted to perform the method of claim 1.

4. A secondary base station, BS, (430) adapted to perform the method of claim

## Patentansprüche

1. Betriebsverfahren einer versorgenden Basisstation, *base station* - BS, (410) in einem Kommunikationssystem, wobei das Betriebsverfahren umfasst:
Hinzufügen - durch die versorgende BS (410) - einer sekundären BS (430) zu einer kooperativen Kommunikationszelle des Kommunikationssystems; und
Senden (419) - an die hinzugefügte sekundäre BS (430) - einer Nachricht, die eine Kennung, *identifier* - ID, einer Mobilstation, *mobile station* - MS, eine Fluss-ID für eine MS und eine Sequenznummer, *sequence number* - SN, wenigstens einer Medienzugriffssteuerungs-Dienstdateneinheit, *medium access control service data unit* - MAC SDU, die durch die versorgende BS (410) nach dem Hinzufügen der sekundären BS (430) verarbeitet wird, enthält,
wobei die Fluss-ID für die MS einen Träger mit einer Qualität eines Dienstes für die MS betrifft,
wobei die SN an der versorgenden BS (410) zugewiesen wird,
wobei die sekundäre BS (430) die SN einem ersten IP-Paket zuweist, das von dem Daten-Gateway, GW, für einen durch die MS-ID und die Fluss-ID identifizierten Datenträger empfangen wird.

2. Betriebsverfahren einer sekundären Basisstation, *base station* - BS, (430) in einem Kommunikationssystem, wobei das Betriebsverfahren umfasst:
Feststellen, dass die sekundäre BS (430) durch eine versorgende BS (410) einer kooperativen Kommunikationszelle des Kommunikationssystems hinzugefügt wird; und
Empfangen - von der versorgenden BS (410) - einer Nachricht, die eine Kennung, *identifier* - ID, einer Mobilstation, *mobile station* - MS, eine Fluss-ID für eine MS und eine Sequenznummer, *sequence number* - SN, wenigstens einer Medienzugriffssteuerungs-Dienstdateneinheit, *medium access control service data unit* - MAC SDU, die in der versorgenden BS (410) verarbeitet wird, enthält,
wobei die Fluss-ID für die MS einen Träger mit einer Qualität eines Dienstes für die MS betrifft,
wobei die SN an der versorgenden BS (410) zugewiesen wird,
wobei die sekundäre BS (430) die SN einem ersten IP-Paket zuweist, das von dem Daten-Gateway, GW, für einen durch die MS-ID und die Fluss-ID identifizierten Datenträger empfangen wird.

3. Versorgende Basisstation, *base station* - BS, (410), die dazu ausgelegt ist, das Verfahren nach Anspruch 1 auszuführen.

4. Sekundäre Basisstation, *base station* - BS, (430), die dazu ausgelegt ist, das Verfahren nach Anspruch 2 auszuführen.

## Revendications

1. Procédé d'exploitation d'une station de base, *base station* - BS, de desserte, (410) dans un système de communication, le procédé d'exploitation comprenant :
l'ajout, par la BS de desserte (410), d'une BS secondaire (430) à une cellule de communication coopérative du système de communication ; et
la transmission (419), à la BS secondaire ajoutée (430), d'un message incluant un identifiant, *identifier* - ID, de station mobile, *mobile station* - MS, un ID de flux pour une MS, et un numéro de séquence, *sequence number* - SN, d'au moins une unité de données de service de contrôle d'accès au support, *medium access control service data unit* - MAC SDU, traité par la BS de desserte (410) après l'ajout de la BS secondaire (430),
dans lequel l'ID de flux pour la MS est associé à une porteuse ayant une qualité d'un service pour la MS,
dans lequel le SN est attribué au niveau de la BS de desserte (410),
dans lequel la BS secondaire (430) affecte le SN à un premier paquet IP qui est reçu à partir de la passerelle de données, *data gateway* - GW, pour une porteuse de données identifiée par l'ID de MS et l'ID de flux.

2. Procédé d'exploitation d'une station de base, *base station* - BS, secondaire, (430) dans un système de communication, le procédé d'exploitation comprenant :
la détermination que la BS secondaire (430) est ajoutée à une cellule de communication coopérative du système de communication par une BS de desserte (410) ; et
la réception, à partir de la BS de desserte (410), d'un message incluant un identifiant, *identifier* - ID, de station mobile, *mobile station* - MS, un ID de flux pour une MS, et un numéro de séquence, *sequence number* - SN, d'au moins une unité de données de service de contrôle d'accès au support, *medium access control service data unit* - MAC SDU, traité dans la BS de desserte (410),
dans lequel l'ID de flux pour la MS est associé à une porteuse ayant une qualité d'un service pour la MS,
dans lequel le SN est attribué au niveau de la BS de desserte (410),
dans lequel la BS secondaire (430) affecte le SN à un premier paquet IP qui est reçu à partir de la passerelle de données, *data gateway* - GW, pour une porteuse de données identifiée par l'ID de MS et l'ID de flux.

3. Station de base, *base station* - BS, de desserte (410) adaptée pour réaliser le procédé selon la revendication 1.

4. Station de base, *base station* - BS, secondaire (430) adaptée pour réaliser le procédé selon la revendication 2.
